# EUROPEAN PATENT SPECIFICATION

(11) **EP 4 198 398 B1**
(45) Date of publication and mention of the grant of the patent: **02.04.2025**
(21) Application number: 22214756.3
(22) Date of filing: 19.12.2022
(51) Int. Cl.: F23R 3/40, B01D 53/86, F02C 6/20, F01D 25/30

(54) **EXHAUST SYSTEM FOR A GAS TURBINE ENGINE AND METHOD FOR USING SAME**
ABGASSYSTEM FÜR EINEN GASTURBINENMOTOR UND VERFAHREN ZUR VERWENDUNG DAVON
SYSTÈME D'ÉCHAPPEMENT POUR MOTEUR À TURBINE À GAZ ET SON PROCÉDÉ D'UTILISATION

(30) Priority: 17.12.2021 US 202117554844
(43) Date of publication of application: 21.06.2023
(73) Proprietor: PRATT & WHITNEY CANADA CORP., Longueuil, Québec J4G 1A1 (CA)
(72) Inventor: STRATTON, Russell, (01BE5) Longueuil, J4G 1A1 (CA)
(74) Representative: Dehns

(56) References cited:
- GB-A- 1 481 057
- JP-A- 2018 040 369
- US-A1- 2007 189 948

## Description

### TECHNICAL FIELD

This disclosure relates generally to exhaust systems for aircraft gas turbine engines and more particularly to exhaust systems configured for treating combustion exhaust gases of aircraft gas turbine engines.

### BACKGROUND OF THE ART

It is generally known in the art to power aircraft gas turbine engines with gases expelled from combustion chambers. In the gas turbine engine, a fuel is combusted in an oxygen rich environment. The fuel may be any appropriate fuel such as a liquid or gas. Exemplary fuels include hydrocarbons (for example methane or kerosene) or hydrogen. Generally, these combustion systems may emit undesirable compounds such as nitrous oxide compounds (NOₓ) and carbon containing compounds. It is generally desirable to decrease various emissions as much as possible so that selected compounds may not enter the atmosphere. In particular, it has become desirable to reduce NOₓ emissions to a substantially low amount. There is a need in the art, therefore, for improved systems and methods for reducing NOₓ emissions from aircraft gas turbine engines.

US 2007/0189948 A1 discloses a prior art catalyst system. The catalyst system includes a catalyst bed that comprises a plurality of catalyst segments arranged such that an exhaust gas flow passes along a longitudinal axis of the catalyst system through the plurality of catalyst segments.

### SUMMARY

It should be understood that any or all of the features or embodiments described herein can be used or combined in any combination with each and every other feature or embodiment described herein unless expressly noted otherwise.

According to an aspect of the present disclosure, there is provided a gas turbine engine for an aircraft as set forth in claim 1.

In any of the aspects or embodiments described above and herein, the gas turbine engine further includes a fixed structure surrounding at least a portion of the turbine section. The exhaust section further includes a diffuser nozzle mounted to the fixed structure downstream of the turbine section and configured to receive the exhaust gas stream from the turbine section. The monolithic catalyst structure is located within the diffuser nozzle.

In any of the aspects or embodiments described above and herein, the gas turbine engine may be a turboprop or a turboshaft gas turbine engine.

In any of the aspects or embodiments described above and herein, the monolithic catalyst structure may include a plurality of cells defining a respective plurality of channels extending therethrough.

In any of the aspects or embodiments described above and herein, the plurality of cells may include a catalytic washcoat.

In any of the aspects or embodiments described above and herein, the reducing agent may be an ammonia-based reducing agent.

In any of the aspects or embodiments described above and herein, the gas turbine engine further may include a nacelle defining an exterior housing of the gas turbine engine. The diffuser nozzle may be entirely located within the nacelle.

In any of the aspects or embodiments described above and herein, the diffuser nozzle may include a housing disposed about a nozzle axis and extending between a first nozzle end and a second nozzle end, the monolithic catalyst structure located in a first axial portion of the housing. A first diameter of the housing in the first axial portion may be greater than a second diameter of a nozzle inlet of the diffuser nozzle and a third diameter of a nozzle outlet of the diffuser nozzle.

According to another aspect of the present disclosure, there is provided a method for treating exhaust gases from a gas turbine engine for an aircraft as set forth in claim 9.

In any of the aspects or embodiments described above and herein, the exhaust section may further include a diffuser nozzle configured to receive the exhaust gas stream from the turbine section and the monolithic catalyst structure may be located within the diffuser nozzle.

In any of the aspects or embodiments described above and herein, the monolithic catalyst structure may include a plurality of cells defining a respective plurality of channels extending therethrough.

In any of the aspects or embodiments described above and herein, the step of injecting the reducing agent into the core flow path of the gas turbine engine may include injecting an ammonia-based reducing agent into the core flow path of the gas turbine engine.

In any of the aspects or embodiments described above and herein, the diffuser nozzle may be located entirely within a nacelle defining an exterior housing of the gas turbine engine.

In any of the aspects or embodiments described above and herein, the method may further include diffusing exhaust gas stream with the diffuser nozzle at a first axial location within the diffuser nozzle and subsequently concentrating the exhaust gas stream with the diffuser nozzle at a second axial location within the diffuser nozzle which is different than the first axial location.

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates a side schematic view of a gas turbine engine including a diffuser nozzle, in accordance with one or more embodiments of the present disclosure.
FIG. 2 illustrates a side view of a diffuser nozzle for a gas turbine engine, in accordance with one or more embodiments of the present disclosure.
FIG. 3 illustrates a cross-sectional view of the diffuser nozzle of FIG. 2, in accordance with one or more embodiments of the present disclosure.
FIG. 4 illustrates a portion of the gas turbine engine of FIG. 1 including a reducing agent injection system, in accordance with one or more embodiments of the present disclosure.
FIG. 5 illustrates a portion of the gas turbine engine of FIG. 1 including a reducing agent injection system, in accordance with one or more embodiments of the present disclosure.

### DETAILED DESCRIPTION

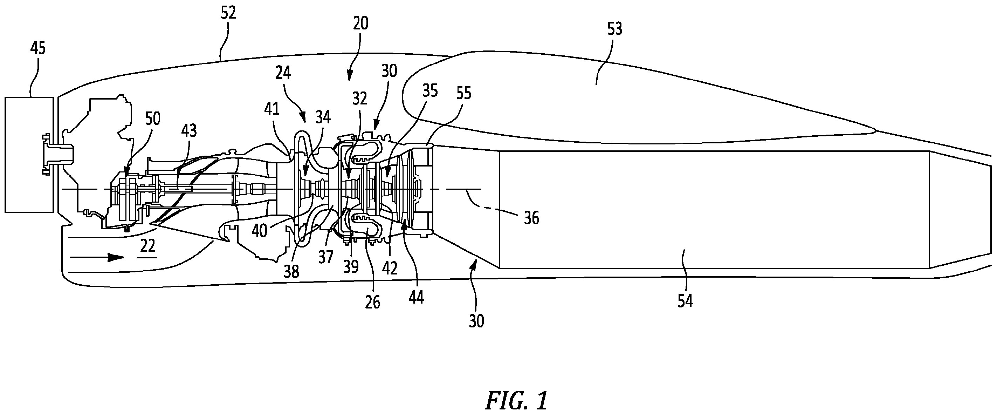

FIG. 1 illustrates a gas turbine engine 20 of a type preferably provided for use in subsonic flight, generally comprising in serial flow communication along a core flow path 21 through an air inlet 22, a compressor section 24 for pressurizing the air from the air inlet 22, a combustor 26 in which the compressed air is mixed with fuel and ignited for generating an annular stream of hot combustion gases, a turbine section 28 for extracting energy from the combustion gases, and an exhaust section 30 through which the combustion exhaust gases exit the gas turbine engine 20.

The gas turbine engine 20 of FIG. 1 generally includes a high-pressure spool 32, a low-pressure spool 34, and a power spool 35 mounted for rotation about an axial centerline 36 (e.g., a rotational axis) of the gas turbine engine 20. The high-pressure spool 32 generally includes a high-pressure shaft 37 that interconnects a high-pressure compressor 38 and a high-pressure turbine 39. The low-pressure spool 34 generally includes a low-pressure shaft 40 that interconnects a low-pressure compressor 41 and a low-pressure turbine 42. The power spool 35 generally includes a drive output shaft 43 in rotational communication with a power turbine 44 having a forward end configured to drive a rotatable load 45. The rotatable load 45 can, for instance, take the form of a propeller. In alternative embodiments, the gas turbine engine 20 may be configured such that the rotatable load 45 may include a rotor, such as a helicopter main rotor, driven by the drive output shaft 43. The drive output shaft 43 may be connected to the rotatable load 45 through a gear assembly 50 to drive the rotatable load 45 at a lower speed than the power spool 35. It should be understood that "low pressure" and "high pressure," or variations thereof, as used herein, are relative terms indicating that the high pressure is greater than the low pressure. The high-pressure shaft 37, the low-pressure shaft 40, and the drive output shaft 43 may be concentric about the axial centerline 36. The gas turbine engine 20 of FIG. 1 further includes a nacelle 52 defining an exterior housing of the gas turbine engine 20. The gas turbine engine 20 of FIG. 1 further includes an aircraft wing 53 mounted to and extending outward from the nacelle 52.

The gas turbine engine 20 of FIG. 1 may be configured, for example, as a turboprop or a turboshaft gas turbine engine. It should be understood that the concepts described herein are not limited to use with turboprops as the teachings may be applied to other types of gas turbine engines such as turbofan gas turbine engines as well as those gas turbine engines including single-spool or two-spool architectures.

In some embodiments, the gas turbine engine 20 may include a diffuser nozzle 54 in the exhaust section 30 of the gas turbine engine 20. The diffuser nozzle 54 is configured to direct combustion exhaust gases and to decelerate the combustion exhaust gases for post-combustion treatment to reduce or otherwise mitigate the emission of air pollutants from the gas turbine engine 20 including, but not limited to, nitrogen oxides (NOₓ). The gas turbine engine 20 may include a fixed structure 55 such as a casing or cowl surrounding at least a portion of the turbine section 28. The diffuser nozzle 54 may be mounted to the fixed structure 55 axially downstream of the turbine section 28. As shown in FIG. 1, at least a portion of the diffuser nozzle 54 may be located within the nacelle 52 surrounding the gas turbine engine 20. In some embodiments, the diffuser nozzle 54 may be entirely disposed within the nacelle 52. Aspects of the present disclosure diffuser nozzle 54 maybe particularly relevant in for the treatment of combustion exhaust gases turboprop or turboshaft gas turbine engines, as the combustion exhaust gases may not be used to generate a substantial amount of thrust for an associated aircraft. Accordingly, treatment of the combustion exhaust gases to remove NOₓ may provide a valuable means of controlling emissions of air pollutants without restricting the operational capacity of the associated gas turbine engine. However, it should be understood that aspects of the present disclosure may also be relevant to other types of aircraft gas turbine engines such as turbofan and turbojet gas turbine engines.

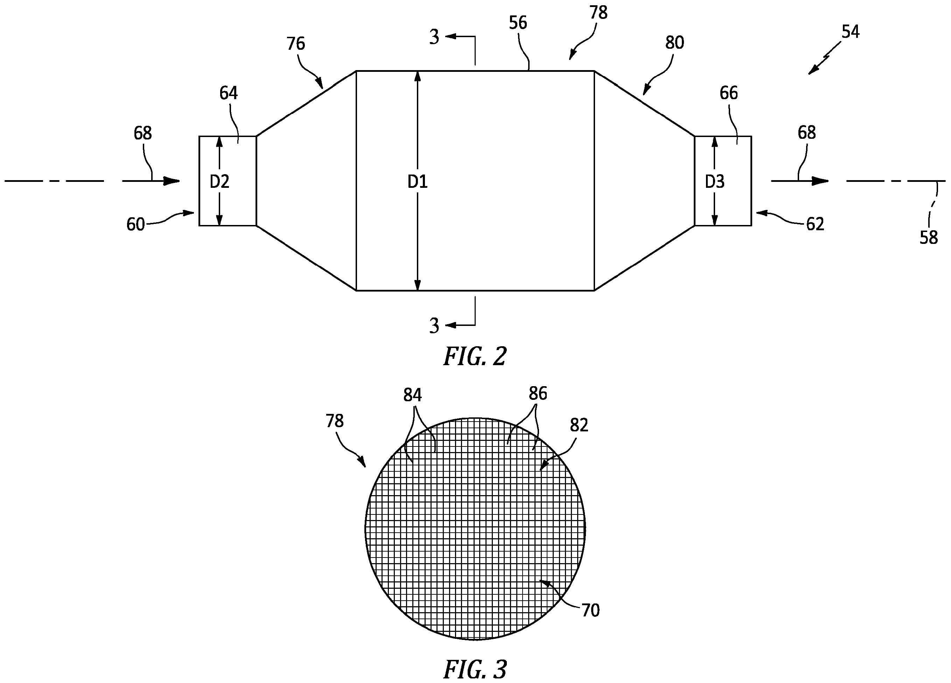

Referring to FIGS. 2 and 3, the diffuser nozzle 54 includes a housing 56 disposed about a nozzle axis 58 and extending between a first nozzle end 60 and a second nozzle end 62. The nozzle axis 58 may or may not be colinear with the axial centerline 36 of the gas turbine engine 20. The housing 56 includes a nozzle inlet 64 located at the first nozzle end 60 and a nozzle outlet 66 located at the second nozzle end 62. Combustion exhaust gases (schematically illustrated in FIG. 2 as exhaust gas stream 68) are directed from the turbine section 28 to the nozzle inlet 64 and then through the diffuser nozzle 54 in a direction from the nozzle inlet 64 to the nozzle outlet 66. The housing 56 radially surrounds and defines a nozzle duct 70 of the diffuser nozzle 54 extending from the nozzle inlet 64 to the nozzle outlet 66 and including the nozzle inlet 64 and the nozzle outlet 66.

In an upstream-to-downstream direction as shown in FIG. 2, the diffuser nozzle 54 may include the nozzle inlet 64, a diffusing axial portion 76, a treatment axial portion 78, a concentrating axial portion 80, and the nozzle outlet 66. The treatment axial portion 78 includes a maximum cross-sectional area of the nozzle duct 70. A diameter D1 of the housing 56 along the treatment axial portion 78 is greater than a diameter D2 of the housing 56 at the nozzle inlet 64 and a diameter D3 of the housing 56 at the nozzle outlet 66. Within the diffusing axial portion 76, the duct cross-sectional area of each duct section 74 gradually increases until reaching a maximum duct cross-sectional area within the treatment axial portion 78. Within the concentrating axial portion 78, the duct cross-sectional area of each duct section 74 gradually decreases from the maximum duct cross-sectional area of the treatment axial portion 78 until reaching the nozzle outlet 66.

The present disclosure exhaust section 30 of the gas turbine engine 20 includes a monolithic catalyst structure 82 configured to treat air pollutants such as NOₓ from the exhaust gas stream 68 as the exhaust gas stream 68 passes through the monolithic catalyst structure 82. In some embodiments, the monolithic catalyst structure 82 may be part of and located within the diffuser nozzle 54, as shown in FIG. 3. For example, the monolithic catalyst structure 82 may be located within the treatment axial portion 78 of the diffuser nozzle 54. However, the present disclosure is not limited to the inclusion of the monolithic catalyst structure 82 in the diffuser nozzle 54 and the monolithic catalyst structure 82 may be included in the exhaust section 30 within the diffuser nozzle 54 of FIGS. 1-3. FIG. 3 illustrates a cross-sectional view of the treatment axial portion 78 of the diffuser nozzle 54 showing the monolithic catalyst structure 82. The monolithic catalyst structure 82 may be disposed across all or substantially all of the duct cross-sectional area within the treatment axial portion 78 of the nozzle duct 70.

The monolithic catalyst structure 82 may be made from a ceramic material forming a plurality of substrate cells 84. The plurality of substrate cells 84 define a respective plurality of channels 86 extending through the monolithic catalyst structure 82 in a generally axial direction. The monolithic catalyst structure 82 includes a catalyst washcoat applied to the surfaces of the substrate cells 84. The catalyst washcoat serves as a carrier for a catalyst such as, but not limited to, platinum, palladium, rhodium, and/or zeolite, which catalyst is used to stimulate and accelerate a NOₓ reduction chemical reaction of the monolithic catalyst structure 82.. As shown in FIG. 3, the substrate cells of the plurality of substrate cells 84 may have a generally square cross-sectional shape. However, plurality of substrate cells 84 can have other cross-sectional shapes such as hexagons, circles, etc. Density of the plurality of substrate cells 84 may vary widely depending on the particular application of the diffuser nozzle 54 as well as other considerations such as the acceptable pressure loss through the diffuser nozzle 54 and the emissions reduction requirements for the diffuser nozzle 54. Accordingly, the density of the plurality of substrate cells 84 may range from approximately 1 to 900 cells per square inch ( 0.155 to 139.5 cells per square cm). The plurality of substrate cells 84 may have an average wall thickness in a range of approximately 0.002 to 0.040 inches (i.e., 0.0508-1.016 mm). The catalyst washcoat applied to the plurality of substrate cells 84 may have an average thickness in a range of approximately 0.001 to 0.002 inches (i.e., 0.0254-0.508 mm).

Combustion exhaust gases of the exhaust gas stream 68 passing through the diffuser nozzle 54 are directed through the monolithic catalyst structure 82 where the exhaust gas stream 68 is treated through chemically interaction with the catalyst washcoat applied to the surfaces of the plurality of substrate cells 84. Diffusion of the exhaust gas stream 68 within the diffusing axial portion 76 of the diffuser nozzle 54 from the nozzle inlet 64 to the maximum cross-sectional area provided by the treatment axial portion 78 provides for an increase in the static pressure of the exhaust gas stream 68 and a reduction in velocity of the exhaust gas stream 68, within the treatment axial portion 78 of the diffuser nozzle 54. By reducing the velocity of the exhaust gas stream 68 within the treatment axial portion 78, the length of time for chemical interaction between the exhaust gas stream 68 and the monolithic catalyst structure 82 may be increased, thereby improving post-combustion treatment of the exhaust gas stream 68. Moreover, the pressure losses of the exhaust gas stream 68 passing through the monolithic catalyst structure 82 are reduced. Concentration of the exhaust gas stream 68 within the concentrating axial portion 80 of the diffuser nozzle 54 from the treatment axial portion 78 to the nozzle outlet 66 provides for a decrease in the static pressure of the exhaust gas stream 68 and an increase in velocity of the exhaust gas stream 68 which exits the nozzle outlet 66 of the diffuser nozzle 54, thereby providing some amount of usable thrust. Accordingly, the configuration of the diffuser nozzle 54 may provide a tradeoff whereby an axial length of the diffuser nozzle 54 may be decreased while a diameter of the diffuser nozzle 54 (e.g., the diameter D1 of the housing 56 along the treatment axial portion 78) may be increased, while maintaining the post-combustion treatment capability of the diffuser nozzle 54 with respect to the exhaust gas stream 68. The diffuser nozzle 54 may, therefore, provide a form factor which can more readily be incorporated into gas turbine engines such as the gas turbine engine 20 and, for example, be retained within a nacelle for the respective gas turbine engine.

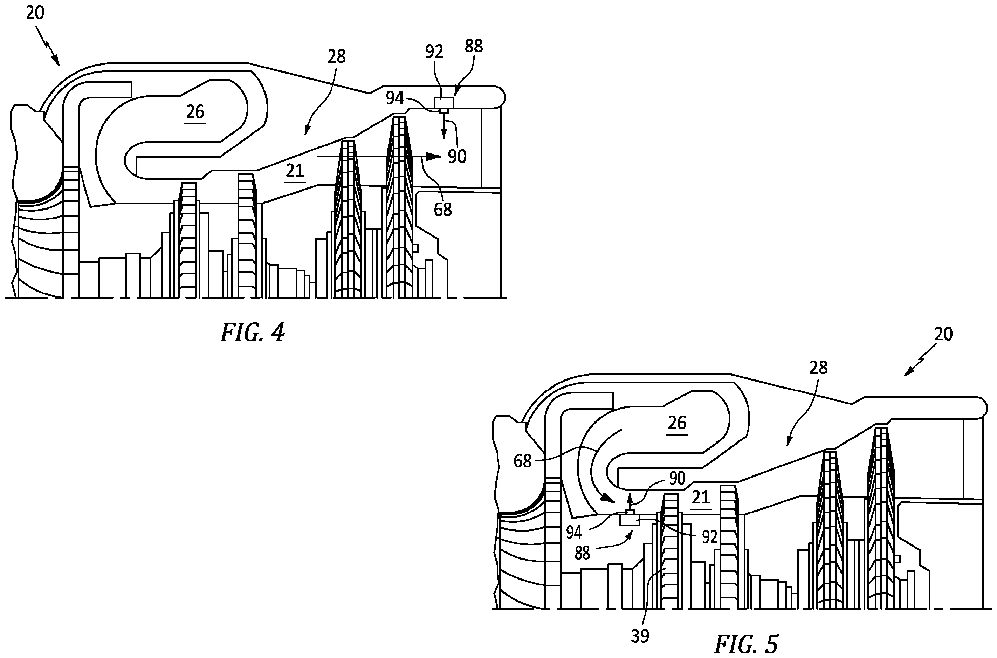

Referring to FIGS. 1, 4, and 5, the present disclosure gas turbine engine 20 further includes a reducing agent injection system 88 configured to inject a reducing agent (schematically illustrated in FIGS. 4 and 5 as reducing agent 90) into the core flow path 21 of the gas turbine engine 20. The post-combustion introduction of a reducing agent into the core flow path 21 may further reduce exhaust emissions of NOₓ which may be found in the exhaust gas stream 68. Reduction of NOₓ emissions may be accomplished through one or both of selective catalytic reduction (SCR) and/or selective non-catalytic reduction (SNCR) chemical reactions, as will be discussed in greater detail. The reducing agent may typically be an ammonia-based fluid including, for example, anhydrous ammonia (NH₃) or aqueous ammonia (NH₄OH), however, the present disclosure is not limited to any particular reducing agent.

In some embodiments, the reducing agent injection system 88 may be configured to implement an SCR process to treat NOₓ found within the exhaust gas stream 68 along the core flow path 21. As shown in FIG. 4, the reducing agent injection system 88 may be positioned within the gas turbine engine 20 to inject the reducing agent 90 into the core flow path 21 downstream of the turbine section 28 (e.g., downstream of a final turbine stage) for mixing with the exhaust gas stream 68. For SCR, the NOₓ reduction reaction takes place as the mixed exhaust gas stream 68 and the reducing agent 90 pass through the monolithic catalyst structure 82 of the diffuser nozzle 54. The chemical reactions for the SCR process may be generalized by the following equations [1], [2], [3] which convert the NOₓ constituents, nitric oxide (NO) and nitrogen dioxide (NO₂), to nitrogen (N₂) and water (H₂O):

**4*NO +* 4*NH₃* + *O*₂ → 4*N*₂ + 6*H*₂*O*** **[1]**

***NO + NO*₂ *+* 2*NH*₃ → 2*N*₂ + 3*H*₂*O*** **[2]**

**6*NO*₂ *+* 8*NH*₃ → 7*N*₂ + 12*H*₂*O*** **[3]**

The SCR process uses the catalyst of the monolithic catalyst structure 82 to reduce the necessary activation energy for the above-noted SCR reduction reactions. Accordingly, the SCR process can eliminate as much as 95 percent of NOₓ within the exhaust gas stream 68, with a sufficiently large and appropriately sized monolithic catalyst structure 82.

The reducing agent injection system 88 is configured to implement a SCR process and a SNCR process to treat NOₓ found within the exhaust gas stream 68 along the core flow path 21. As shown in FIG. 5, the reducing agent injection system 88 is positioned within the gas turbine engine 20 to inject the reducing agent 90 into the core flow path 21 downstream of the combustor 26 but upstream of the turbine section 28 (e.g., upstream of the high-pressure turbine 39), for mixing with the exhaust gas stream 68. The SNCR process does not require a catalyst, but may only occur at elevated temperatures such as, for example, between 1,400 °F and 2,000 °F and, preferably, greater than approximately 1,600 ° F (respectively 760 °C, 1093 °C and 871 °C).

Accordingly, the SNCR process may only occur in portions of the core flow path 21 of the gas turbine engine 20 with sufficiently high temperatures. The chemical reaction for the SNCR process may be represented by the following equation [4] which converts the NOₓ constituent, nitric oxide (NO), to nitrogen (N₂) and water (H₂O):

4*NO +* 4*NH*₃ *+ O*₂ → 4*N*₂ *+* 6*H*₂*O* **[4]**

Because of the very short time that the mixed exhaust gas stream 68 and reducing agent 90 may spend in the temperature range necessary for the SNCR process to occur, the SNCR process may result in a NOₓ reduction of less than 10 percent in aircraft gas turbine engine applications. Accordingly, the possible increased cost and complexity of positioning the reducing agent injection system 88 upstream of the high-pressure turbine 39 (in contrast to placement of the reducing agent injection system 88 downstream of the turbine section 28) may be considered with the expected NOₓ reduction provided by the associated SNCR process, for the particular NOₓ emissions reduction application.

In some embodiments, the reducing agent injection system 88 may include an annular manifold 92, as shown in FIGS. 4 and 5, which extends about the axial centerline 36 of the gas turbine engine 20. The reducing agent injection system 88 may further include a plurality of nozzles 94 circumferentially spaced about the manifold 92 and configured to direct the reducing agent 90 into the exhaust gas stream 68 transiting the core flow path 21. It should be understood, however, that the present disclosure reducing agent injection system 88 is not limited to the above-described configuration and other means for introducing the reducing agent to the exhaust gas stream 68 may be considered.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Accordingly, the present disclosure is not to be restricted except in light of the attached claims.

## Claims

1. A gas turbine engine (20) for an aircraft, the gas turbine engine (20) comprising:
a turbine section (28);
an exhaust section (30) configured to receive an exhaust gas stream (68) from the turbine section (28), the exhaust section (30) including a monolithic catalyst structure (82); and
a reducing agent injection system (88) configured to inject a reducing agent (90) into a core flow path (21) of the gas turbine engine (20), wherein the reducing agent injection system (88) is located upstream of the turbine section (28).

2. The gas turbine engine (20) of claim 1, further comprising:
a fixed structure (55) surrounding at least a portion of the turbine section (28);
wherein the exhaust section (30) further includes a diffuser nozzle (54) mounted to the fixed structure (55) downstream of the turbine section (28) and configured to receive the exhaust gas stream (68) from the turbine section (28), and wherein the monolithic catalyst structure (82) is located within the diffuser nozzle (54).

3. The gas turbine engine (20) of claim 2, further comprising a nacelle (52) defining an exterior housing of the gas turbine engine (20), wherein the diffuser nozzle (54) is located entirely within the nacelle (52).

4. The gas turbine engine (20) of claim 2 or 3, wherein the diffuser nozzle (54) includes a housing (56) disposed about a nozzle axis (58) and extending between a first nozzle end (60) and a second nozzle end (62), the monolithic catalyst structure (82) is located in a first axial portion of the housing (56) and wherein a first diameter (D1) of the housing (56) in the first axial portion is greater than a second diameter (D2) of a nozzle inlet (64) of the diffuser nozzle (54) and a third diameter (D3) of a nozzle outlet (66) of the diffusion nozzle.

5. The gas turbine engine (20) of any preceding claim, wherein the gas turbine engine (20) is a turboprop or a turboshaft gas turbine engine (20).

6. The gas turbine engine (20) of any preceding claim, wherein the monolithic catalyst structure (82) comprises a plurality of cells defining a respective plurality of channels (86) extending therethrough.

7. The gas turbine engine (20) of claim 6, wherein the plurality of cells includes a catalytic washcoat.

8. The gas turbine engine (20) of any preceding claim, wherein the reducing agent (90) is an ammonia-based reducing agent (90).

9. A method for treating exhaust gases from a gas turbine engine (20) for an aircraft, the method comprising:
directing an exhaust gas stream (68) from a turbine section (28) of the gas turbine engine (20) into an exhaust section (30) of the gas turbine engine (20);
directing the exhaust gas stream (68) through a monolithic catalyst structure (82) of the exhaust section (30) to remove nitrogen oxides (NOₓ) from the exhaust gas stream (68); and
injecting a reducing agent (90) into a core flow path (21) of the gas turbine engine (20) upstream of the turbine section (28).

10. The method of claim 9, wherein the exhaust section (30) further includes a diffuser nozzle (54) configured to receive the exhaust gas stream (68) from the turbine section (28), the monolithic catalyst structure (82) located within the diffuser nozzle (54).

11. The method of claim 10, wherein the diffuser nozzle (54) is entirely located within a nacelle (52) defining an exterior housing of the gas turbine engine (20).

12. The method of claim 10 or 11, further comprising diffusing the exhaust gas stream (68) with the diffuser nozzle (54) at a first axial location within the diffuser nozzle (54) and subsequently concentrating the exhaust gas stream (68) with the diffuser nozzle (54) at a second axial location within the diffuser nozzle (54) which is different than the first axial location.

13. The method of any of claims 9 to 12, wherein the monolithic catalyst structure (82) comprises a plurality of cells defining a respective plurality of channels (86) extending therethrough.

14. The method of any of claims 9 to 13, wherein the step of injecting the reducing agent (90) into the core flow path (21) of the gas turbine engine (20) includes injecting an ammonia-based reducing agent (90) into the core flow path (21) of the gas turbine engine (20).

## Patentansprüche

1. Gasturbinenmotor (20) für ein Luftfahrzeug, wobei der Gasturbinenmotor (20) Folgendes umfasst:
einen Turbinenabschnitt (28);
einen Abgasabschnitt (30), der dazu konfiguriert ist, einen Abgasstrom (68) aus dem Turbinenabschnitt (28) aufzunehmen,
wobei der Abgasabschnitt (30) eine monolithische Katalysatorstruktur (82) beinhaltet; und
ein Reduktionsmittel-Einspritzsystem (88), das dazu konfiguriert ist, ein Reduktionsmittel (90) in einen Kernströmungspfad (21) des Gasturbinenmotors (20) einzuspritzen, wobei sich das Reduktionsmittel-Einspritzsystem (88) stromaufwärts des Turbinenabschnitts (28) befindet.

2. Gasturbinenmotor (20) nach Anspruch 1, ferner umfassend:
eine feststehende Struktur (55), die mindestens einen Teil des Turbinenabschnitts (28) umgibt;
wobei der Abgasabschnitt (30) ferner eine Diffusordüse (54) beinhaltet, die an der feststehenden Struktur (55) stromabwärts des Turbinenabschnitts (28) montiert und dazu konfiguriert ist, den Abgasstrom (68) aus dem Turbinenabschnitt (28) aufzunehmen, und wobei sich die monolithische Katalysatorstruktur (82) innerhalb der Diffusordüse (54) befindet.

3. Gasturbinenmotor (20) nach Anspruch 2, ferner umfassend eine Gondel (52), die ein Außengehäuse des Gasturbinenmotors (20) definiert, wobei sich die Diffusordüse (54) vollständig innerhalb der Gondel (52) befindet.

4. Gasturbinenmotor (20) nach Anspruch 2 oder 3, wobei die Diffusordüse (54) ein Gehäuse (56) beinhaltet, das um eine Düsenachse (58) angeordnet ist und sich zwischen einem ersten Düsenende (60) und einem zweiten Düsenende (62) erstreckt, wobei sich die monolithische Katalysatorstruktur (82) in einem ersten axialen Teil des Gehäuses (56) befindet und wobei ein erster Durchmesser (D1) des Gehäuses (56) in dem ersten axialen Teil größer ist als ein zweiter Durchmesser (D2) eines Düseneinlasses (64) der Diffusordüse (54) und ein dritter Durchmesser (D3) eines Düsenauslasses (66) der Diffusionsdüse.

5. Gasturbinenmotor (20) nach einem der vorhergehenden Ansprüche, wobei der Gasturbinenmotor (20) ein Turboprop- oder Turbowellen-Gasturbinenmotor (20) ist.

6. Gasturbinenmotor (20) nach einem der vorhergehenden Ansprüche, wobei die monolithische Katalysatorstruktur (82) eine Vielzahl von Zellen umfasst, die eine jeweilige Vielzahl von sich durch diese erstreckenden Kanälen (86) definiert.

7. Gasturbinenmotor (20) nach Anspruch 6, wobei die Vielzahl von Zellen einen katalytischen Washcoat beinhaltet.

8. Gasturbinenmotor (20) nach einem der vorhergehenden Ansprüche, wobei das Reduktionsmittel (90) ein ammoniakbasiertes Reduktionsmittel (90) ist.

9. Verfahren zum Behandeln von Abgasen aus einem Gasturbinenmotor (20) für ein Luftfahrzeug, wobei das Verfahren Folgendes umfasst:
Leiten eines Abgasstroms (68) von einem Turbinenabschnitt (28) des Gasturbinenmotors (20) in einen Abgasabschnitt (30) des Gasturbinenmotors (20);
Leiten des Abgasstroms (68) durch eine monolithische Katalysatorstruktur (82) des Abgasabschnitts (30), um Stickoxide (NOₓ) aus dem Abgasstrom (68) zu entfernen; und
Einspritzen eines Reduktionsmittels (90) in einen Kernströmungspfad (21) des Gasturbinenmotors (20) stromaufwärts des Turbinenabschnitts (28).

10. Verfahren nach Anspruch 9, wobei der Abgasabschnitt (30) ferner eine Diffusordüse (54) beinhaltet, die dazu konfiguriert ist, den Abgasstrom (68) aus dem Turbinenabschnitt (28) aufzunehmen, wobei sich die monolithische Katalysatorstruktur (82) innerhalb der Diffusordüse (54) befindet.

11. Verfahren nach Anspruch 10, wobei sich die Diffusordüse (54) vollständig innerhalb einer Gondel (52) befindet, die ein Außengehäuse des Gasturbinenmotors (20) definiert.

12. Verfahren nach Anspruch 10 oder 11, ferner umfassend Diffundieren des Abgasstroms (68) mit der Diffusordüse (54) an einer ersten axialen Stelle innerhalb der Diffusordüse (54) und anschließendes Konzentrieren des Abgasstroms (68) mit der Diffusordüse (54) an einer zweiten axialen Stelle innerhalb der Diffusordüse (54), die sich von der ersten axialen Stelle unterscheidet.

13. Verfahren nach einem der Ansprüche 9 bis 12, wobei die monolithische Katalysatorstruktur (82) eine Vielzahl von Zellen umfasst, die eine jeweilige Vielzahl von sich durch diese erstreckenden Kanälen (86) definiert.

14. Verfahren nach einem der Ansprüche 9 bis 13, wobei der Schritt des Einspritzens des Reduktionsmittels (90) in den Kernströmungspfad (21) des Gasturbinenmotors (20) Einspritzen eines ammoniakbasierten Reduktionsmittels (90) in den Kernströmungspfad (21) des Gasturbinenmotors (20) umfasst.

## Revendications

1. Moteur à turbine à gaz (20) pour un aéronef, le moteur à turbine à gaz (20) comprenant :
une section de turbine (28) ;
une section d'échappement (30) configurée pour recevoir un flux de gaz d'échappement (68) provenant de la section turbine (28),
la section d'échappement (30) comportant une structure de catalyseur monolithique (82) ; et
un système d'injection d'agent réducteur (88) configuré pour injecter un agent réducteur (90) dans un trajet d'écoulement central (21) du moteur à turbine à gaz (20), dans lequel le système d'injection d'agent réducteur (88) est situé en amont de la section de turbine (28).

2. Moteur à turbine à gaz (20) selon la revendication 1, comprenant également :
une structure fixe (55) entourant au moins une partie de la section de turbine (28) ;
dans laquelle la section d'échappement (30) comporte en outre une buse de diffusion (54) montée sur la structure fixe (55) en aval de la section de turbine (28) et configurée pour recevoir le flux de gaz d'échappement (68) provenant de la section de turbine (28), et dans laquelle la structure de catalyseur monolithique (82) est située à l'intérieur de la buse de diffusion (54).

3. Moteur à turbine à gaz (20) selon la revendication 2, comprenant également une nacelle (52) définissant un boîtier extérieur du moteur à turbine à gaz (20), dans lequel la buse de diffusion (54) est située entièrement à l'intérieur de la nacelle (52).

4. Moteur à turbine à gaz (20) selon la revendication 2 ou 3, dans lequel la buse de diffusion (54) comprend un boîtier (56) disposé autour d'un axe de buse (58) et se prolongeant entre une première extrémité de buse (60) et une seconde extrémité de buse (62), la structure de catalyseur monolithique (82) est située dans une première partie axiale du boîtier (56) et dans lequel un premier diamètre (D1) du boîtier (56) dans la première partie axiale est supérieur à un second diamètre (D2) d'une entrée de buse (64) de la buse de diffusion (54) et à un troisième diamètre (D3) d'une sortie de buse (66) de la buse de diffusion.

5. Moteur à turbine à gaz (20) selon l'une quelconque des revendications précédentes, dans lequel le moteur à turbine à gaz (20) est un turbopropulseur ou un turbomoteur à turbine à gaz (20).

6. Moteur à turbine à gaz (20) selon l'une quelconque des revendications précédentes, dans lequel la structure de catalyseur monolithique (82) comprend une pluralité de cellules définissant une pluralité respective de canaux (86) se prolongeant à travers celles-ci.

7. Moteur à turbine à gaz (20) selon la revendication 6, dans lequel la pluralité de cellules comporte une couche de lavage catalytique.

8. Moteur à turbine à gaz (20) selon l'une quelconque des revendications précédentes, dans lequel l'agent réducteur (90) est un agent réducteur à base d'ammoniac (90).

9. Procédé de traitement des gaz d'échappement d'un moteur à turbine à gaz (20) pour un aéronef, le procédé comprenant :
l'acheminement d'un flux de gaz d'échappement (68) depuis une section de turbine (28) du moteur à turbine à gaz (20) dans une section d'échappement (30) du moteur à turbine à gaz (20) ;
l'acheminement du flux de gaz d'échappement (68) à travers une structure de catalyseur monolithique (82) de la section d'échappement (30) pour éliminer les oxydes d'azote (NOₓ) du flux de gaz d'échappement (68) ; et
l'injection un agent réducteur (90) dans un trajet d'écoulement central (21) du moteur à turbine à gaz (20) en amont de la section turbine (28).

10. Procédé selon la revendication 9, dans lequel la section d'échappement (30) comporte en outre une buse de diffusion (54) configurée pour recevoir le flux de gaz d'échappement (68) provenant de la section de turbine (28), la structure de catalyseur monolithique (82) étant située à l'intérieur de la buse de diffusion (54).

11. Procédé selon la revendication 10, dans lequel la buse de diffusion (54) est entièrement située à l'intérieur d'une nacelle (52) définissant un boîtier extérieur du moteur à turbine à gaz (20).

12. Procédé selon la revendication 10 ou 11, comprenant également la diffusion du flux de gaz d'échappement (68) avec la buse de diffusion (54) à un premier emplacement axial à l'intérieur de la buse de diffusion (54) et ensuite la concentration du flux de gaz d'échappement (68) avec la buse de diffusion (54) à un second emplacement axial à l'intérieur de la buse de diffusion (54) qui est différent du premier emplacement axial.

13. Procédé selon l'une quelconque des revendications 9 à 12, dans lequel la structure de catalyseur monolithique (82) comprend une pluralité de cellules définissant une pluralité respective de canaux (86) se prolongeant à travers celles-ci.

14. Procédé selon l'une quelconque des revendications 9 à 13, dans lequel l'étape d'injection de l'agent réducteur (90) dans le trajet d'écoulement central (21) du moteur à turbine à gaz (20) comporte l'injection d'un agent réducteur à base d'ammoniac (90) dans le trajet d'écoulement central (21) du moteur à turbine à gaz (20) .
